# EUROPEAN PATENT APPLICATION

(11) **EP 1 928 077 A2**
(43) Date of publication of application: **04.06.2008**
(21) Application number: 07121383.9
(22) Date of filing: 23.11.2007
(51) Int. Cl.: H02M 3/155

(54) **Current fed power converter system including normally-on switch**

(30) Priority: 29.11.2006 US 564313
(71) Applicant: General Electric Company, Schenectady, NY 12345 (US)
(72) Inventor: Roesner, Robert, D-80797, Munich (DE); El-Barbari, Said Farouk Said, 85354 Freising (DE); Krokoszinski, Hans-Joachim, 69226 Nussloch (DE); De Rooij, Michael Andrew, Schenectady, NY 12309 (US)
(74) Representative: Illingworth-Law, William Illingworth

(57) **Abstract**

A system (10) includes an energy source (12) configured for operating as a current limited source and a DC-to-DC converter (14) or current switched inverter (30) configured to receive current from the energy source and comprising a normally-on switch (15).

## Description

### BACKGROUND

The subject matter disclosed herein relates generally to power converter systems including semiconductor switches.

Photovoltaic (PV) cells generate direct current (DC) power with the level of DC current being dependent on solar irradiation and the level of DC voltage dependent on temperature. When alternating current (AC) power is desired, an inverter is used to convert the DC energy into AC energy. Typical PV inverters employ two stages for power processing with the first stage configured for providing a constant DC voltage and the second stage configured for converting the constant DC voltage to AC current. Often, the first stage includes a boost converter, and the second stage includes a single-phase or three-phase inverter system. The efficiency of the two-stage inverter is an important parameter affecting PV system performance and is a multiple of the individual stage efficiencies with each stage typically causing one-half of the system losses.

Thus it is desirable to increase the efficiency of each stage of the PV inverter. Typically, first stage boost converters include normally-off silicon MOSFET (metal oxide semiconductor field effect transistor) or IGBT (insulated gate bipolar transistor) switching devices.

### BRIEF DESCRIPTION

In accordance with one embodiment, a system comprises an energy source configured for operating as a current limited source and a DC-to-DC converter configured to receive current from the energy source and comprising a normally-on switch.

In accordance with another embodiment, a power converter system comprises a DC-to-DC current fed converter comprising a normally-on switch configured for providing an adjusted DC voltage and a voltage fed inverter configured for converting the adjusted DC voltage into an AC current.

In accordance with another embodiment, a photovoltaic inverter comprises a DC-to-DC current fed boost converter comprising a normally-on switch, a diode, and an inductor and configured for providing a constant DC voltage from a photovoltaic energy source; and an inverter configured for converting the DC voltage into an AC current.

In accordance with another embodiment, a power converter system comprises a DC-to-DC current fed converter configured for providing an adjusted DC voltage and a current switched inverter configured for converting the adjusted DC voltage into an AC current, the current switched inverter comprising normally-on switches.

In accordance with another embodiment, a power converter system comprises a current switched inverter configured for converting a filtered voltage of a current limited energy source into an AC current, the current switched inverter comprising normally-on switches.

### DRAWINGS

These and other features, aspects, and advantages of the present invention will become better understood when the following detailed description provided by way of example only is read with reference to the accompanying drawings in which like characters represent like parts throughout the drawings, wherein:

FIG. 1 is a block diagram of a power converter system in accordance with one embodiment.

FIG. 2 is a diagram of a DC-to-DC converter for use in a more specific aspect of the embodiment of FIG. 1.

FIG. 3 is a diagram of a power converter system in accordance with another embodiment.

FIG. 4 is a diagram of a power converter system in accordance with another embodiment.

### DETAILED DESCRIPTION

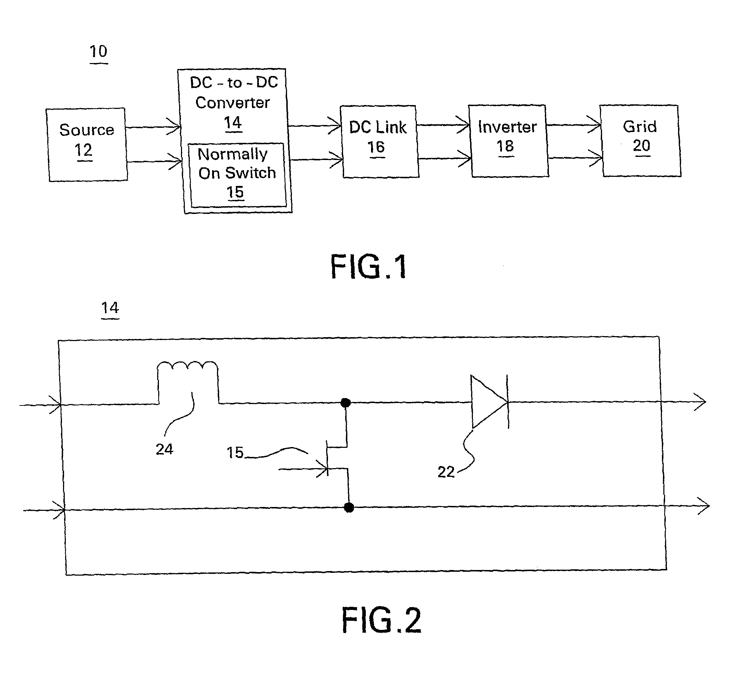

FIG. 1 is a block diagram in accordance with one embodiment wherein a system 10 comprises an energy source 12 configured for operating as a current limited source and a DC-to-DC converter 14 comprising a normally-on switch 15.
FIG. 2 is a diagram of a DC-to-DC converter for use in a more specific aspect of the embodiment of FIG. 1.

A current limited source is a source that, when short circuited, naturally limits the current to levels within the working range of the system or slightly above the working range of the system but not so much above that equipment damage results. A current limited source has a specific maximum current value and typically exhibits a high impedance across its terminals. Often, current limited sources are additionally voltage limited. In one embodiment, energy source 12 comprises a photovoltaic energy source. Other types of energy sources may be used, however, with one example being a fuel cell.

DC-to-DC converter 14 typically comprises a current fed converter. A current fed converter, as used herein, means a converter that is fed by a current limited source. In another more specific embodiment, DC-to-DC converter 14 comprises a boost converter for maintaining a constant DC voltage level.

Switch 15 typically comprises a wide bandgap semiconductor material such as silicon carbide or gallium arsenide. Other potential switch materials include gallium nitride, diamonds, and carbon nanotubes. Silicon carbide (SiC) switching devices, for example, often have superior conduction and switching behaviors as compared with silicon switching devices and may therefore increase the efficiency of DC-to-DC converter 14.

Switch 15 comprises a normally-on switch of any appropriate type. One example of a normally-on switch is a junction field effect transistor (JFET). Some types of metal oxide semiconductor field effect transistors (MOSFETs), such as depletion mode MOSFETs, are also normally-on switches.

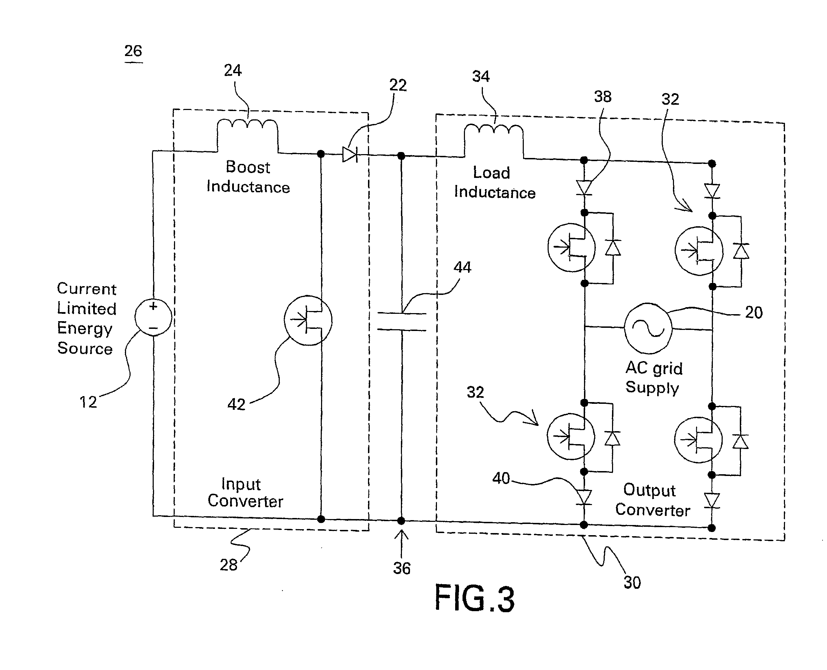

In a more specific example, a SiC JFET is used as switch 15 in a boost stage 14 of a photovoltaic inverter system 10. Devices with normally-on switching characteristics are not typically used in power electronic systems out of concern that the devices' terminals will short circuit in the event of a failure. However, because a photovoltaic source (such as a solar cell) is a current limited source, the normally-on characteristic of a SiC JFET is not a safety critical issue. If DC-to-DC converter 14 fails, the SiC JFET switch 15 will short circuit the photovoltaic energy source 12, but the current will only be a percentage above the normal operating current. Typically the short circuit current will be less than or equal to twenty or thirty percent higher than the normal operating current of the energy source. In a more specific embodiment, the short circuit current is less than or equal to ten percent higher than the normal operating current of the energy source. The photovoltaic energy source and associated cables and connectors (not shown) can carry the increased current without overheating, even during lengthy faults. This current limiting feature is a difference between photovoltaic and fuel cell sources as compared with more conventional DC sources such as batteries and generators. In the embodiment of FIG. 2, when switch 15 is turned on, the voltage across switch 15 drops to zero, and diode 22 becomes reverse biased and blocks the voltage of the capacitor on the DC link (an example capacitor is shown in Fig. 3 as capacitor 44 on DC link 36). Thus the shorted switch 15 does not short grid 20.

When a silicon carbide switch is used, it is convenient to also include a silicon carbide diode 22 in DC-to-DC converter 14. In one example, diode 22 comprises a schottky diode. A schottky diode is useful because it has almost no reverse recovery losses and thus results in reduced switching losses in the DC-to-DC converter. A SiC schottky diode has slightly higher conduction losses but lower net losses than a standard PN junction silicon diode, for example. Additionally, SiC devices can operate at higher temperatures than silicon devices. Although silicon carbide diodes are described herein for purposes of example, other materials may be used with one example including gallium nitride.

Referring again to FIG. 1, in one example, DC link 16 couples DC-to-DC converter 14 to an inverter (DC-to-AC converter) 18 and typically comprises a DC link capacitor or capacitor bank (not shown in FIG. 1). Inverter 18 converts the DC voltage into AC current for supply to grid 20 or other loads (not shown). In embodiments wherein a current fed converter is used as DC-to-DC converter 14, inverter 18 typically comprises a voltage fed inverter.

Also shown in Fig. 2 is an inductance 24. Inductance 24 is used to store energy in the form of a current that is used in the converter to source the DC link capacitor. Typical inductors for PV inverters are selected based on power level, voltage range, and switching frequency. For example, for a 2.5kW boost converter operating at 20kHz, a typical inductor ranges from 2mH to 10mH. When a SiC JFET is used in combination with the inductor, the JFET can be operated at a high switching frequency in the range of 100 kilohertz to 300 kilohertz, for example without compromising efficiency. This will reduce the inductor's inductance and improve the converter's efficiency.

Although FIG. 1 illustrates one source 12, one DC-to-DC converter 14, and one inverter 18, if desired, additional sources, DC-to-DC converters, inverters, or combinations of any of these may be used. In one example, as described in commonly assigned Application US20040125618, multiple energy sources and a multiple DC-to-DC converters are connected to a single inverter.

FIG. 3 is a diagram of a power converter system in accordance with another embodiment wherein a power converter system 26 comprises a DC-to-DC current fed converter 28 configured for providing an adjusted DC voltage and a current switched inverter 30 configured for converting the adjusted DC voltage into an AC current, the current switched inverter comprising normally-on switches 32.

In the embodiment of FIGs. 2-3, converter diode 22 is useful for separating the inverter from the converter under a fault condition and blocking energy from the grid 20 from reaching and potentially damaging energy source 12. Such diodes are not typically present in inverters but could be added as illustrated by diodes 38 and 40 in FIG. 3. Additionally, or alternatively, an inverter inductance 34 may be included and couple inverter 30 and DC link 36, for example. In such inductance embodiments, when using a normally-on switch, the absence of a gate signal causes the switch or switches to be in the on state. If for some reason the gate driver loses power or fails, then the switch or switches will be in the on state. A current path across the grid 20 will occur and the condition will then result in the load inductance being coupled directly across the grid through the DC link capacitor 44, and the source current will rise in a manner that is at a lower rate than without the inductance. Thus the system will have time to detect a fault as the current continues to rise beyond a specific threshold. Once the threshold has been exceeded, action can be taken, such as opening an AC contactor (not shown) to disconnect the system from the energy source. Additional inverter inductances (not shown) may be useful in protecting the system in the event of simultaneous faults on two switches. If desired in the embodiment of FIG. 3, converter 28 may also comprise an additional normally-on switch 42 in a similar manner as discussed above with respect to FIGs. 1 and 2.

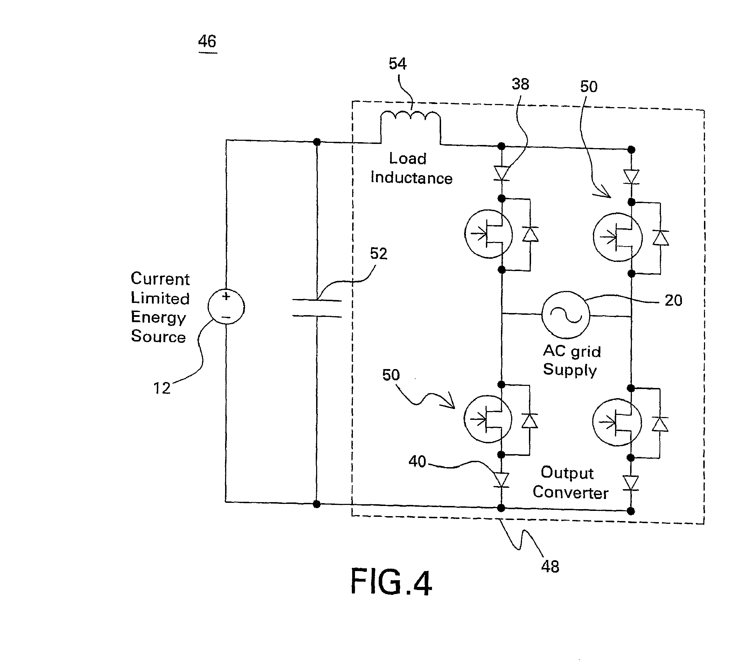

FIG. 4 is a diagram of a power converter system in accordance with another embodiment wherein a power converter system 46 comprises a current switched inverter 48 configured for converting a filtered voltage of a current limited energy source 12 into an AC current and comprising normally-on switches 50. In a more specific embodiment, power converter system 46 further includes a filter capacitor 52 and a filter inductance 54 coupling the inverter to the filter capacitor.

Many aspects of the embodiments discussed above with respect to FIGs. 1 and 2 are applicable to the examples of FIGs. 3 and 4. For example, power converter systems 26 and 46 may be configured for receiving current from an energy source 12 that configured for operating as a current limited source or, more specifically, a photovoltaic energy source. As another example, switches 32 and 50 may comprise a material selected from the group consisting of a gallium arsenide, gallium nitride, diamond, carbon nanotubes, or silicon carbide and a device such as a JFET or depletion mode MOSFET.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A system (10) comprising
an energy source (12) configured for operating as a current limited source; and
a DC-to-DC converter (14) configured to receive current from the energy source and comprising a normally-on switch (15).

2. The system of claim 1, wherein the switch comprises a silicon carbide switch.

3. The system of claim 1 or claim 2, wherein the DC-to-DC converter further comprises a silicon carbide diode (22).

4. The system of any one of the preceding claims, wherein the energy source comprises a photovoltaic energy source, wherein the switch comprises a JFET, and wherein the DC-to-DC converter further comprises a schottky diode.

5. A power converter system (10) comprising:
a DC-to-DC current fed converter (14) comprising a normally-on switch (15) configured for providing an adjusted DC voltage;
a voltage fed inverter (18) configured for converting the adjusted DC voltage into an AC current.

6. The system of claim 5, wherein the DC-to-DC converter comprises a boost converter.

7. A power converter system (26) comprising:
a DC-to-DC current fed converter (28) configured for providing an adjusted DC voltage;
a current switched inverter (30) configured for converting the adjusted DC voltage into an AC current, the current switched inverter comprising normally-on switches (32).

8. The system of claim 7, further comprising a DC link (36) and wherein the inverter further comprises an inductance (34) coupling the inverter to the DC link.

9. The system of claim 7 or claim 8, wherein the normally-on switch of the inverter comprises an inverter normally-on switch, and wherein the converter further comprises a converter normally-on switch (42).

10. A power converter system (46) comprising:
a current switched inverter (48) configured for converting a filtered voltage of a current limited energy source (12) into an AC current, the current switched inverter comprising normally-on switches (50).
